# EUROPÄISCHE PATENTSCHRIFT

(11) **EP 3 973 834 B1**
(45) Veröffentlichungstag und Bekanntmachung des Hinweises auf die Patenterteilung: **02.08.2023**
(21) Anmeldenummer: 20197816.0
(22) Anmeldetag: 23.09.2020
(51) Int. Cl.: A47K 3/00, E04B 1/68, F16J 15/10, E04F 13/08

(54) **DICHT- UND MONTAGEVORRICHTUNG FÜR SANITÄREINRICHTUNGEN**
SEALING AND MOUNTING DEVICE FOR SANITARY INSTALLATIONS
DISPOSITIF D'ÉTANCHÉITÉ ET DE MONTAGE POUR AGENCEMENTS SANITAIRES

(43) Veröffentlichungstag der Anmeldung: 30.03.2022
(73) Patentinhaber: EDM-System GmbH, 57399 Kirchhundem (DE)
(72) Erfinder: Malzkorn, Ralf, 34596 Bad Zwesten (DE); Hille, Markus, 57399 Kirchhundem (DE)
(74) Vertreter: Patentanwälte Dörner & Kötter PartG mbB

(56) Entgegenhaltungen:
- EP-A1- 3 372 131
- AT-B1- 518 596
- DE-U1- 8 711 126
- DE-U1-202019 101 061

## Beschreibung

Die Erfindung betrifft eine Dicht- und Montagevorrichtung für Sanitäreinrichtungen, insbesondere Badewannen oder Duschtassen, nach dem Patentanspruch 1. Die Erfindung betrifft auch ein Verfahren zum dichtenden Anschluss einer Sanitäreinrichtung, insbesondere einer Badewanne oder Duschtasse, an eine Wand mit einer solchen Vorrichtung, nach dem Anspruch 9.

Beim Setzen von Badewannen, Duschtassen oder Waschbecken im Sanitärbereich kommen regelmäßig Dicht- und Montagebänder zum Einsatz. Solche Dicht- und Montagebänder sind auf ihrer Vorderseite regelmäßig mit einer Klebefläche zur bündigen Befestigung des Randes der einzubauenden Sanitäreinrichtung versehen. Oberhalb dieser Klebefläche befindet sich ein Bereich des Dicht- und Montagebandes, der nach Anbringen an die Wand mit einem Wandbelag, wie beispielsweise Fliesen überdeckt wird. Zur Befestigung an der Wand ist ein solches Dicht- und Montageband üblicherweise flächig mit einer Klebeschicht versehen.

Badewannen sowie auch Duschtassen unterliegen im Gebrauch wechselnden Gewichtsbelastungen, die durch einlaufendes Wasser sowie das Körpergewicht des Benutzers verursacht sind. Hierdurch sind Materialbewegungen bewirkt, die über die Klebeverbindung auf das Dicht- und Montageband übertragen werden. Zum Ausgleich dieser Bewegungen ist ein durchgehend elastischer Mittelabschnitt zwischen dem oberen und dem unteren Abschnitt des Dicht- und Montagebands vorgesehen, um Beschädigungen zu vermeiden. Dieser elastische Mittelabschnitt ist jedoch empfindlich gegenüber Schneid- und Stichwerkzeugen, wie sie oftmals zur Entfernung einer alten Silikonfuge eingesetzt werden. Wird hierbei etwas zu tief geschnitten, so besteht die Gefahr einer Beschädigung des Dicht- und Montagebandes, wobei die Gesamtabdichtung nicht mehr gegeben ist.

Zur Vermeidung einer entsprechenden Beschädigung des Dicht- und Montagebandes durch versehentliche Einwirkungen von scharfen Gegenständen ist in der EP 2 405 067 A1 vorgeschlagen, das Dicht- und Montageband an einer Seite mit einem Schnittschutzstreifen aus einem schnittfesten, zweiten Material zu versehen. Nachteilig an diesem Dicht- und Montageband hat sich in der Praxis erwiesen, dass das schnittfeste flexible Material in vielen Fällen nicht ausreicht, um dem von einem Handwerker oftmals rabiat geführten Schneidwerkzeug bei der Entfernung einer Silikonfuge zu widerstehen. Darüber hinaus wird durch das aufgebrachte Schnittschutzmaterial die Flexibilität des Dichtbandes beeinträchtigt, wodurch eine durchgehend flächige Anlage des Dicht- und Montagebandes an der Wand beeinträchtigt ist. Nicht zuletzt wird auch die Elastizität des Dicht- und Montagebandes in diesem Bereich gemindert, was bei Materialbewegungen der Badewanne oder Duschtasse bei deren Benutzung zu Beschädigungen des Dicht- und Montagebandes führen kann. Weitere Schnittschutzvorrichtungen sind in der DE 20 2019 101 061 U1, der AT 518 596 B1 sowie der EP 3 372 131 A1 offenbart.

Hier will die Erfindung Abhilfe schaffen. Der Erfindung liegt die Aufgabe zugrunde, eine Dicht- und Montagevorrichtung für Sanitäreinrichtungen, insbesondere Badewannen oder Duschtassen bereitzustellen, bei der die vorstehenden Nachteile vermieden sind und die darüber hinaus eine ordnungsgemäße Verlegung eines angrenzenden Wandbelages, insbesondere eines Fliesenbelages unterstützt. Gemäß der Erfindung wird diese Aufgabe durch eine Dicht- und Montagevorrichtung mit den Merkmalen des Patentanspruchs 1 gelöst.

Dadurch, dass eine Winkelleiste zur Überdeckung eines von dem ersten und dem zweiten Abschnitt begrenzten, elastischen Mittelabschnitts angeordnet ist, die eine Klebefläche zur Befestigung an der einzubringenden Sanitäreinrichtung aufweist, ist ein wirksamer Schutz dieses Mittelabschnitts gebildet, ohne dass dessen Elastizität beeinträchtigt ist. Etwaige Materialbewegungen einer eingesetzten Sanitäreinrichtung werden so über die Winkelleiste nicht auf den elastischen Mittelabschnitt übertragen. Die Winkelleiste dient darüber hinaus einer sauberen Anbindung von aufzubringendem Wandbelag, der entlang der Winkelleiste auf dieser aufgesetzt werden kann.

In Weiterbildung der Erfindung ist die Winkelleiste L-förmig ausgebildet. Hierdurch ist ein orthogonal zur Dicht- und Montagevorrichtung verlaufender, schmaler Steg zur Aufnahme eines Wandbelags vorhanden, der durch diesen vollständig überdeckt wird.

In Ausgestaltung der Erfindung ist die Winkelleiste aus Metall oder Hartkunststoff, bevorzugt faserverstärktem Kunststoff hergestellt. Hierdurch ist ein hohes Maß an Widerstandsfähigkeit gegenüber Schneid- und Stichwerkzeugen gewährleistet.

In Weiterbildung der Erfindung ist auf dem winklig zur Dichtunterlage angestellten Schenkel der Winkelleiste ein flexibler Montagestreifen angeordnet, der den Schenkel in Querrichtung überragt und der eine Klebeschicht aufweist, die sich bei an dem Mittelabschnitt angelegter Position der Winkelleiste winklig an die Klebefläche des ersten Abschnitts der Dichtunterlage anschließt. Hierdurch ist eine winklige Einfassung der einzusetzen Sanitäreinrichtung durch den ersten Abschnitt der Dichtunterlage einerseits und den auf dem Schenkel der Winkelleiste angeordneten Montagestreifen andererseits erzielt. Bevorzugt ist der Montagestreifen aus unvernetztem PE-Schaum hergestellt.

Erfindungsgemäß ist der zweite Abschnitt der Dichtunterlage flächig mit einem Vlies überdeckt. Hierdurch ist eine saugfähige Unterlage zur Befestigung eines Fliesenbelags bereitgestellt.

In weiterer Ausgestaltung der Erfindung ist das Vlies an seiner der Dichtunterlage zugewandten Innenseite mit einem äußeren Randabschnitt mit der Dichtunterlage verbunden und im Übrigen flächig mit einer Klebeschicht versehen, die mit einer abziehbaren Schutzfolie überdeckt ist. Hierdurch kann das Vlies bei Bedarf flächig mit der Dichtunterlage verbunden werden.

In weiterer Ausgestaltung der Erfindung ist der äußere Randabschnitt der Dichtunterlage mit einer Perforation zu definierten Abtrennung versehen. Hierdurch ist das Vlies entlang der definierten Perforation abtrennbar, wodurch auch solche Wandbeläge gut befestigbar sind, die ihrerseits bereits über eine Vliesunterlage verfügen.

Der vorliegenden Erfindung liegt weiterhin die Aufgabe zugrunde, ein Verfahren zum dichtenden Anschluss einer Sanitäreinrichtung, insbesondere einer Badewanne oder Duschtasse, an eine Wand mit einer Vorrichtung der vorgenannten Art bereitzustellen, das eine einfache und zuverlässige abgedichtete Einsetzung einer Sanitäreinrichtung ermöglicht. Gemäß der Erfindung wird diese Aufgabe durch ein Verfahren mit den Merkmalen des Patentanspruchs 9 gelöst. Hierbei wird zunächst die vorstehend beschriebene Dichtunterlage mit ihrer Rückseite flächig an die Wand geklebt. Anschließend wird die Sanitäreinrichtung mit ihrer Oberkante an den ersten, eine Klebefläche aufweisenden Abschnitt der Dichtunterlage gepresst und nachfolgend wird die Winkelleiste mit einem ersten Schenkel an den Mittelbereich der Dichtunterlage angelegt, wobei der Montagestreifen des zweiten Schenkels über seine Klebefläche mit der Sanitäreinrichtung verbunden wird. Die Winkelleiste ist somit schützend vor dem Mittelabschnitt der Dichtunterlage positioniert, ohne deren Elastizität zu beeinträchtigen. Zugleich ist die Oberkannte der Sanitäreinrichtung durch den flexiblen Montagestreifen geschützt.

In Weiterbildung der Erfindung wird das Vlies flächig auf den zweiten Abschnitt der Dichtunterlage geklebt, wonach Fliesen auf den zweiten Schenkel der Dichtleiste aufgelegt und auf das Vlies aufgeklebt werden. Hierdurch ist eine saubere und gleichmäßige Anordnung der Fliesen unterstützt. Durch den flexiblen Montagestreifen ist dabei eine flexible Fuge gebildet. Bevorzugt wird über die Fliesen überstehender Montagestreifen abgeschnitten, bevor der Übergangsbereich zwischen Sanitäreinrichtung und Fliesen mit einer Silikondichtschicht versehen wird. Hierdurch ist die Dicht- und Montagevorrichtung vollständig von der Sanitäreinrichtung, dem Wandbelag und der Silikondichtschicht verborgen.

In alternativer Ausgestaltung der Erfindung wird das Vlies von der Dichtunterlage entfernt und nachfolgend wird eine mit einem Befestigungsvlies versehende Wandabdeckung auf den zweiten Abschnitt der Dichtunterlage sowie auf an diese eingrenzende Wand aufgeklebt. Bevorzugt wird über die Wandabdeckung überstehender Montagestreifen abgeschnitten, bevor der Übergangsbereich zwischen Sanitäreinrichtung und Wandabdeckung mit einer Silikondichtschicht versehen wird. Dabei kann die Wandabdeckung vor dem Klebevorgang auf den schmalen Schenkel der Winkelleiste aufgesetzt werden, wodurch diese vor ihrer Fixierung ausgerichtet ist. Auch hier ist durch den flexiblen Montagestreifen eine flexible Fuge gebildet.

Andere Weiterbildungen und Ausgestaltungen der Erfindung sind in den übrigen Unteransprüchen angegeben. Ein Ausführungsbeispiel ist in der Zeichnung dargestellt und wird nachfolgend im Einzelnen beschrieben. Es zeigen:
- Figur 1: die schematische Darstellung einer Dicht- und Montagevorrichtung mit angeordneter Badewanne und Fliesenwandbeleg in der Seitenansicht;
- Figur 2: die Anordnung aus Figur 1 in einer schematischen räumlichen Detaildarstellung und
- Figur 3: die schematische Darstellung der Dichtunterlage einer Dicht- und Montageanordnung in einer weiteren Ausführungsform.

Die als Ausführungsbeispiel gewählte Dicht- und Montageanordnung für Sanitäreinrichtungen besteht im Wesentlichen aus einer elastischen Dichtunterlage 1, an deren elastischem Mittelabschnitt 14 eine Winkelleiste 2 angelegt ist.

Die elastische Dichtunterlage 1 ist auf ihrer Rückseite flächig mit einer Klebeschicht versehen, die über eine - nicht dargestellte - abziehbare Schutzfolie versehen ist. Diese Klebefläche dient der Flächenbefestigung an einer Wand. Auf der dieser gegenüberliegenden Vorderseite ist ein mit einer Klebefläche versehener Verbindungsabschnitt 11 angeordnet, der über eine abziehbare Schutzfolie überdeckt ist. An der dem Verbindungsabschnitt 11 darüber liegenden Seite ist ein Wandbelagabschnitt 12 angeordnet, der flächig mit einem Vlies 13 zur Aufnahme eines Wandbelags versehen ist. Von dem Verbindungsabschnitt 11 und dem Wandbelagabschnitt 12 ist zwischen diesen ein Mittelabschnitt 14 begrenzt. Dieser Mittelabschnitt 14 dient der freien Anlage der Winkelleiste 2 und weist keine Klebe- oder Haftschicht auf.

Die Winkelleiste 2 ist im Ausführungsbeispiel aus Aluminium hergestellt und weist einen L-förmigen Querschnitt auf. Auf ihrem schmalen Schenkel ist ein diesen in Querrichtung überragender flexibler Montagestreifen 21 befestigt, der an dem breiteren Schenkel der Winkelleiste 2 anliegt und auf seiner dem schmaleren Schenkel zugewandten Seite eine Klebefläche 211 aufweist, die mit einer - nicht dargestellten - abziehbaren Schutzfolie überdeckt ist.

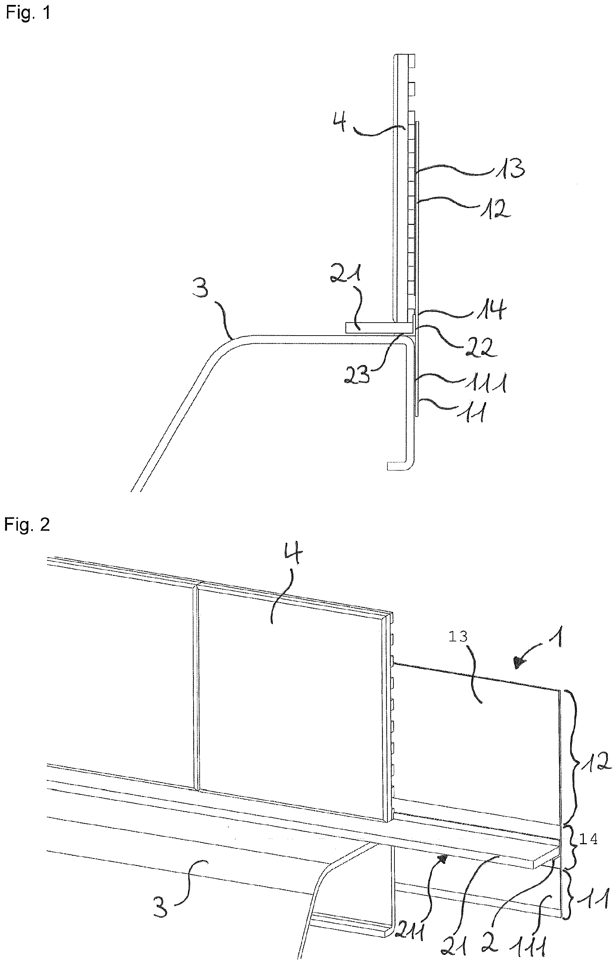

In Figur 1 ist der Anschluss einer - schematisch angedeuteten - Badewanne an einer Wand über diese Dicht- und Montagevorrichtung dargestellt. Hierbei ist die elastische Dichtunterlage 1 mit ihrer rückseitigen Klebefläche an einer - nicht dargestellten - Wand befestigt. Der Wannenrand 3 ist an die Klebeschicht 111 des Verbindungsabschnitts 11 angepresst. Die Winkelleiste 2 ist an den Mittelabschnitt 14 der Dichtunterlage 1 einerseits sowie auf den Wannenrand 3 andererseits angelegt. Auf den Montagestreifen 21 der Winkelleiste 2 sind Fliesen 4 aufgesetzt, die auf das Vlies 13 des Wandbelagabschnitts 12 sowie die angrenzende Wand aufgeklebt sind. Nach Fertigstellung des so erreichten Anschlusses der Badewanne kann der über die Fliesen 4 hinausragende Abschnitt des Montagestreifens 21 unter einem Winkel abgeschnitten werden, wobei das Trennwerkzeug gegen den schmaleren Schenkel der Winkelleiste 2 geführt wird. Sodann kann in bekannter Art und Weise zwischen Wannenrand 3 und Fliesen 4 eine Silikonfuge aufgebracht werden. Bei Belastung der so an der Wand angeschlossenen Badewanne können die hierdurch verursachten geringen Bewegungen von der Winkelleiste 2 entlang des Mittelabschnitts 14 verfolgt werden, ohne dass die Gefahr einer Beschädigung der Dichtunterlage 1 gegeben ist. In dem Fall, dass die Silikonfuge zu erneuern ist, kann diese über ein gegen den schmaleren Schenkel der Winkelleiste 2 geführtes Trennwerkzeug entfernt werden, ohne dass die Gefahr einer Beschädigung der Dichtunterlage 1 gegeben ist.

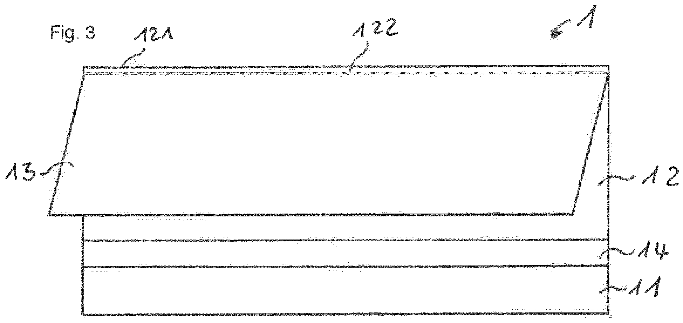

In Figur 3 ist eine alternative Ausgestaltung der Dichtunterlage 1 schematisch dargestellt. Hierbei ist das Vlies 13 lediglich mit einem Randabschnitt 121 des Wandbelagabschnitts 12 verbunden und im Übrigen an seiner dem Wandbelagabschnitt 12 zugewandten Seite flächig mit einer Klebeschicht versehen, die über eine - nicht dargestellte - abziehbare Schutzfolie verdeckt ist. Der Randabschnitt 121 des Wandbelagabschnitts 12 ist mit einer Perforationslinie 122 versehen, über die das Vlies 13 zusammen mit dem Randabschnitt 121 definiert von dem Wandbelagabschnitt 12 abtrennbar ist.

Die so ausgestaltete Dichtunterlage 1 ist universell für verschiedenste Wandbeläge einsetzbar. Bei Wandbelägen, die ein Anlagevlies benötigen, kann die Schutzfolie einfach von der Klebefläche des Vlieses 13 entfernt und dieses anschließend flächig mit dem Wandbelagabschnitt 12 verklebt werden. Bei solchen Wandbelägen, die bereits mit einem Vlies versehen sind, kann das Vlies 13 einfach zusammen mit dem Randabschnitt 121 entlang der Perforationslinie 122 von dem Wandbelagabschnitt 12 abgetrennt werden.

## Patentansprüche

1. Dicht- und Montagevorrichtung für Sanitäreinrichtungen, insbesondere Badewannen oder Duschtassen, umfassend
- eine elastische Dichtunterlage (1), mit einer Rückseite zur flächigen Befestigung an einer Wand und einer dieser gegenüberliegenden Vorderseite, wobei die Vorderseite einen ersten Abschnitt (11) zur dichtenden Verbindung mit der Sanitäreinrichtung und einen zweiten Abschnitt (12) zur Aufnahme eines Wandbelags, insbesondere Fliesenbelags aufweist, wobei zwischen dem ersten und dem zweiten Abschnitt ein Mittelabschnitt (14) begrenzt ist, der keine Klebe- oder Haftschicht aufweist,
- und eine Winkelleiste (2) mit einem ersten Schenkel (22) zur nicht verbindenden Anlage an den von dem ersten und dem zweiten Abschnitt begrenzten, elastischen Mittelabschnitt (14), und einem zweiten Schenkel (23), der eine Klebefläche zur Befestigung an der Sanitäreinrichtung aufweist,
wobei der Wandbelagabschnitt (12) flächig mit einem Vlies (13) zur Aufnahme eines Wandbelags überdeckt ist.

2. Vorrichtung nach Anspruch 1, **dadurch gekennzeichnet, dass** der erste Abschnitt (11) der Vorderseite eine Klebefläche aufweist.

3. Vorrichtung nach Anspruch 1 oder 2, **dadurch gekennzeichnet, dass** die Winkelleiste (2) L-förmig ausgebildet ist.

4. Vorrichtung nach einem der Ansprüche 1 bis 3, **dadurch gekennzeichnet, dass** die Winkelleiste (2) aus Metall oder Hartkunststoff, bevorzugt faserverstärktem Kunststoff hergestellt ist.

5. Vorrichtung nach einem der vorgenannten Ansprüche, **dadurch gekennzeichnet, dass** auf dem winklig zur Dichtunterlage angestellten zweiten Schenkel (23) der Winkelleiste ein flexibler Montagestreifen (21) angeordnet ist, der den zweiten Schenkel (23) in Querrichtung überragt und der eine Klebefläche (211) aufweist.

6. Vorrichtung nach Anspruch 5, **dadurch gekennzeichnet, dass** der Montagestreifen (21) aus unvernetztem PE-Schaum hergestellt ist.

7. Vorrichtung nach einem der vorgenannten Ansprüche, **dadurch gekennzeichnet, dass** das Vlies (13) an seiner der Dichtunterlage (1) zugewandten Innenseite mit einem äußeren Randabschnitt (121) der Dichtunterlage verbunden und im Übrigen flächig mit einer Klebeschicht versehen ist, die mit einer abziehbaren Schutzfolie überdeckt ist.

8. Vorrichtung nach Anspruch 7, **dadurch gekennzeichnet, dass** der äußere Randabschnitt (121) der Dichtunterlage (1) mit einer Perforation (122) zur definierten Abtrennung versehen ist.

9. Verfahren zum dichtenden Anschluss einer Sanitäreinrichtung, insbesondere einer Badewanne oder Duschtasse, an eine Wand mit einer Vorrichtung nach einem der vorgenannten Ansprüche, wobei zunächst die Dichtunterlage (1) mit ihrer Rückseite flächig an die Wand geklebt wird, anschließend die Sanitäreinrichtung mit ihrem Rand (3) an den ersten, mit einer Klebefläche versehenen Abschnitt (11) der Dichtunterlage (1) gepresst wird und nachfolgend die Winkelleiste (2) mit ihrem ersten Schenkel (22) an den Mittelabschnitt (14) der Dichtunterlage (1) einerseits und mit dem zweiten Schenkel (23) an den Rand (3) der Sanitäreinrichtung andererseits angelegt wird.

10. Verfahren nach Anspruch 9, **dadurch gekennzeichnet, dass** auf dem winklig zur Dichtunterlage angestellten zweiten Schenkel (23) der Winkelleiste ein flexibler Montagestreifen (21) angeordnet ist, der den zweiten Schenkel (23) in Querrichtung überragt und der eine Klebefläche (211) aufweist, wobei der flexible Montagestreifen (21) des zweiten Schenkels (23) über seine Klebefläche (211) mit dem Rand (3) der Sanitäreinrichtung verbunden wird.

11. Verfahren nach Anspruch 10 **dadurch gekennzeichnet, dass** das Vlies (13) flächig auf den zweiten Abschnitt (12) der Dichtunterlage (1) geklebt wird, wonach Fliesen (4) auf den zweiten Schenkel (23) der Winkelleiste (2) aufgelegt und auf das Vlies (13) aufgeklebt werden, wonach bevorzugt über die Fliesen (4) überstehender Montagestreifen (21) abgeschnitten wird, bevor der Übergangsbereich zwischen Sanitäreinrichtung und Fliesen (4) mit einer Silikondichtschicht versehen wird.

12. Verfahren nach Anspruch 10, **dadurch gekennzeichnet, dass** das Vlies von
der Dichtunterlage (1) entfernt wird und nachfolgend eine mit einem Befestigungsvlies versehene Wandabdeckung auf den zweiten Abschnitt (12) der Dichtunterlage (1) sowie auf an diese angrenzende Wand aufgeklebt wird, wonach bevorzugt über die Wandabdeckung überstehender Montagestreifen (21) abgeschnitten wird, bevor der Übergangsbereich zwischen Sanitäreinrichtung und Wandabdeckung mit einer Silikondichtschicht versehen wird.

## Claims

1. Sealing and mounting device for sanitary installations, in particular bathtubs and shower trays, comprising
- an elastic sealing underlay (1) with a rear side for flat fastening to a wall and a front side opposite thereto, wherein the front side has a first section (11) for sealing connection to the sanitary installation and a second section (12) for receiving a wall covering, in particular a tile covering, wherein a middle section (14), which has no bonding or adhesive layer, is delimited between the first and the second section,
- and an angle strip (2) with a first leg (22) for non-connecting abutment against the elastic middle section (14) delimited by the first and the second section, and a second leg (23), which has an adhesive surface for fastening to the sanitary installation,
wherein the wall covering section (12) is covered over its surface with a fleece (13) for receiving a wall covering.

2. Device according to claim 1, **characterised in that** the first section (11) of the front side has an adhesive surface.

3. Device according to claim 1 or 2, **characterised in that** the angle strip (2) is L-shaped.

4. Device according to one of claims 1 to 3, **characterised in that** the angle strip (2) is made of metal or hard plastic, preferably fibre-reinforced plastic.

5. Device according to one of the previous claims, **characterised in that** a flexible mounting strip (21) is arranged on the second leg (23) of the angle strip, which leg is set at an angle to the sealing underlay, projects beyond the second leg (23) in the transverse direction and which has an adhesive surface (211).

6. Device according to claim 5, **characterised in that** the mounting strip (21) is made of non-crosslinked PE foam.

7. Device according to one of the previous claims, **characterised in that** the fleece (13) is connected to an outer edge section (121) of the sealing underlay on its inner side facing the sealing underlay (1) and is otherwise provided on its entire surface with an adhesive layer, which is covered with a removable protective film.

8. Device according to claim 7, **characterised in that** the outer edge section (121) of the sealing underlay (1) is provided with a perforation (122) for defined separation.

9. Method for the sealing connection of a sanitary installation, in particular of a bathtub or shower tray, on a wall with a device according to one of the previous claims, wherein first the sealing underlay (1) is bonded flat to the wall with its rear side, then the sanitary installation is pressed with its edge (3) against the first section (11) of the sealing underlay (1) provided with an adhesive surface and subsequently, the angle strip (2) is placed with its first leg (22) against the middle section (14) of the sealing underlay (1) on the one hand and with the second leg (23) against the edge (3) of the sanitary installation on the other hand.

10. Method according to claim 9, **characterised in that** on the second leg (23) of the angle strip set at an angle to the sealing underlay a flexible mounting strip (21) is arranged, which projects beyond the second leg (23) in a transverse direction and which has an adhesive surface (211), wherein the flexible mounting strip (21) of the second leg (23) is connected to the edge (3) of the sanitary installation via its adhesive surface (211).

11. Method according to claim 10, **characterised in that** the fleece (13) is bonded flat to the second section (12) of the sealing underlay (1), after which tiles (4) are placed onto the second leg (23) of the angle strip (2) and are bonded to the fleece (13), after which preferably the mounting strip (21) projecting beyond the tiles (4) is cut off before the transition area between the sanitary installation and the tiles (4) is provided with a silicone sealing layer.

12. Method according to claim 10, **characterised in that** the fleece is removed from the sealing underlay (1) and subsequently, a wall covering provided with a fastening fleece is bonded to the second section (12) of the sealing underlay (1) as well as to the wall adjacent thereto, after which preferably the mounting strip (21) projecting beyond the wall covering is cut off before the transition area between the sanitary installation and the wall covering is provided with a silicone sealing layer.

## Revendications

1. Dispositif d'étanchéité et de montage pour agencement sanitaires, en particulier pour baignoires ou receveurs de douche, comprenant
- une garniture d'étanchéité (1) élastique avec un côté arrière servant à la fixation à plat contre un mur et un côté avant lui faisant face, sachant que le côté avant présente un premier segment (11) servant à établir un liaison étanchéisante avec l'agencement sanitaire et un deuxième segment (12) servant à recevoir un revêtement mural, en particulier un revêtement carrelé, sachant qu'entre le premier et le deuxième segment est délimité un segment médian (14) qui ne présente pas de couche de collage ou adhérente,
- et un bandeau coudé (2) comprenant une première branche (22) pour applique, sans opérer de liaison, contre le segment médian (14) élastique délimité par le premier et le deuxième segments, et comprenant une deuxième branche (23) qui présente une surface de collage pour la fixation contre l'agencement sanitaire,
sachant que le segment (12) recevant le revêtement mural est recouvert à plat avec un non-tissé (13) pour recevoir un revêtement mural.

2. Dispositif selon la revendication 1, **caractérisé en ce que** le premier segment (11) du côté avant présente une surface de collage.

3. Dispositif selon la revendication 1 ou 2, **caractérisé en ce que** le bandeau coudé (2) est configuré en forme de L.

4. Dispositif selon l'une des revendications 1 à 3, **caractérisé en ce que** le bandeau coudé (2) est en métal ou en matière plastique dure, de préférence en matière plastique renforcée de fibre.

5. Dispositif selon l'une des revendications précédentes, **caractérisé en ce que** sur la deuxième branche (23) du bandeau coudé, appliquée en angle contre la garniture d'étanchéité, est disposé un bandeau de montage (21) flexible qui dépasse la deuxième branche (23) en direction transversale et qui présente une surface de collage (211).

6. Dispositif selon la revendication 5, **caractérisé en ce que** le bandeau de montage (21) est fabriqué en mousse de PE non réticulée.

7. Dispositif selon l'une des revendications précédentes, **caractérisé en ce que** le non-tissé (13), sur son côté intérieur regardant la garniture d'étanchéité (1), est relié avec un segment marginal (121) extérieur de la garniture d'étanchéité et au demeurant muni sur sa surface d'une couche de collage recouverte d'un film de protection amovible.

8. Dispositif selon la revendication 7, **caractérisé en ce que** le segment marginal (121) extérieur de la garniture d'étanchéité (1) est muni d'une perforation (122) permettant une séparation définie.

9. Procédé pour le raccordement étanchéisant d'un agencement sanitaire, en particulier d'une baignoire ou d'un receveur de douche, contre un mur équipé d'un dispositif selon l'une des revendications précédentes, sachant que dans un premier temps le dos de la garniture d'étanchéité (1) est collé à plat contre le mur, qu'ensuite l'agencement sanitaire est pressé par son bord (3) contre le premier segment (11) de la garniture d'étanchéité (1) muni d'une surface de collage et qu'ensuite le bandeau coudé (2) est appliqué par sa première branche (22) contre le segment médian (14) de la garniture d'étanchéité (1) d'une part et par la deuxième branche (23) contre le bord (3) de l'agencement sanitaire d'autre part.

10. Procédé selon la revendication 9, **caractérisé en ce que** sur la deuxième branche (23) du bandeau coudé, appliquée en angle contre la garniture d'étanchéité, est disposé un bandeau de montage (21) flexible qui dépasse la deuxième branche (23) en direction transversale et qui présente une surface de collage (211), sachant que le bandeau de montage flexible (21) de la deuxième branche (23) est relié via sa surface de collage (211) avec le bord (3) de l'agencement sanitaire.

11. Procédé selon la revendication 10, **caractérisé en ce que** le non-tissé (13) est collé à plat sur le deuxième segment (12) de la garniture d'étanchéité (1), ce après quoi les carreaux (4) sont posés sur la deuxième branche (23) du bandeau coudé (2) et collés sur le non-tissé (13), ce après quoi le bandeau de montage faisant saillie au-dessus des carreaux (4) est coupé, avant que la zone de transition entre l'agencement sanitaire et les carreaux (4) ne soit munie d'une couche d'étanchéité au silicone.

12. Procédé selon la revendication 10, **caractérisé en ce que** le non-tissé est retiré de la garniture d'étanchéité (1) et qu'ensuite un recouvrement de mur muni d'un non-tissé de fixation est collé sur le deuxième segment (12) de la garniture d'étanchéité (1) ainsi que sur le mur limitrophe de cette garniture, ce après quoi le bandeau de montage (21) faisant saillie au-dessus du recouvrement de mur est coupé, avant que la zone de transition entre l'agencement sanitaire et le recouvrement de mur ne soit munie d'une couche d'étanchéité au silicone.
